# EUROPEAN PATENT APPLICATION

(11) **EP 4 482 070 A1**
(43) Date of publication of application: **25.12.2024**
(21) Application number: 22925465.1
(22) Date of filing: 14.02.2022
(51) Int. Cl.: H04L 5/00

(54) **TERMINAL AUXILIARY INFORMATION REPORTING METHOD AND APPARATUS THEREFOR AND TERMINAL AUXILIARY INFORMATION OBTAINING METHOD AND APPARATUS THEREFOR**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/076263
(87) International publication number: WO 2023/151103

(57) **Abstract**

Disclosed in embodiments of the present application are a terminal auxiliary information reporting method and apparatus therefor and a terminal auxiliary information obtaining method and apparatus therefor, which can be applied to systems such as Internet of vehicles and V2X. The method comprises: a first terminal device sends a sidelink (SL) resource request information list and an auxiliary information list to a network side device, wherein the resource request information list comprises a plurality of resource requests of second terminal devices, and the resource requests of the second terminal devices comprise destination addresses of the second terminal devices; the auxiliary information list comprises auxiliary information of the second terminal devices, and terminal device identifiers corresponding to the auxiliary information are determined by means of index identifiers, wherein the terminal device identifiers corresponding to the auxiliary information are destination addresses in the resource requests at index identifier positions in the resource request information list (301). By implementing the embodiments of the present application, indication of the second terminal devices for which the auxiliary information is suitable is achieved by means of existing destination address fields in the SL resource request information list, so that signaling overhead for reporting the auxiliary information can be saved.

## Description

### TECHNICAL FIELD

The present disclosure relates to the field of communication technologies, and particularly to a method for reporting terminal assistance information, a method for acquiring terminal assistance information and an apparatus thereof.

### BACKGROUND

In order to support direct communication between terminal devices, a direct link (also referred to as a sidelink, SL) communication method is introduced, and an interface between the terminal devices is a PC-5 (sidelink communication) interface. The sidelink supports three transceiving modes, such as, unicast, multicast and broadcast, according to a correspondence between a transmitting terminal device and a receiving terminal device. A first terminal device in a connected state needs to send a SidelinkUEInformation (sidelink communication terminal information) message to a network side device (such as a base station) during sidelink communication, which includes a sidelink transmitting resource request information list.

In related arts, when the first terminal device reports the sidelink transmitting resource request information list to the network side device, an identifier of the second terminal device in unicast connection is indicated by using a destination address field in a transmission resource request in the sidelink transmitting resource request information list. However, a signaling of the sidelink transmitting resource request information list cannot be expanded at present, then a field for indicating assistance information, such as a paging identifier, sidelink discontinuous reception (SL DRX) assistance information, and a SL DRX configuration, etc., cannot be added to the sidelink transmitting resource request information list. If a destination address (also referred to as an identity) of the second terminal device is added to the assistance information such as the paging identifier, the SL DRX assistance information, and the SL DRX configuration reported by the first terminal device, a large amount of signaling overhead may be increased. Therefore, how to indicate the assistance information such as the paging identifier, the SL DRX assistance information, and the SL DRX configuration to achieve a purpose of reducing the signaling overhead has become an urgent problem to be solved.

Embodiments of the present disclosure provides a method for reporting terminal assistance information, a method for acquiring terminal assistance information and an apparatus thereof, which may save a signaling overhead of reporting the assistance information.

In a first aspect, a method for reporting terminal assistance information is provided according to an embodiment of the present disclosure. The method is performed by a first terminal device and includes:
sending a sidelink (SL) resource request information list and an assistance information list to a network side device; in which the resource request information list includes a resource request of a second terminal device, and the resource request of the second terminal device includes a destination address of the second terminal device; the assistance information list includes assistance information, and the assistance information determines a terminal device identifier corresponding to the assistance information by means of an index identifier;
in which the terminal device identifier corresponding to the assistance information is a destination address in a resource request at a position of the index identifier in the resource request information list.

In this technical solution, a mapping relationship between the assistance information and the destination address of the second terminal device in the resource request information list is established by means of the index identifier corresponding to the assistance information, so that the network side device determines the second terminal device for which the assistance information sent by the first terminal device is applicable according to the mapping relationship. It can be seen that, with an existing destination address field in the resource request information list, indication of the second terminal device for which the assistance information is applicable is realized, which may save a signaling overhead of reporting the assistance information.

In an implementation, the index identifier is carried in the assistance information.

In a possible implementation, the method further includes: setting the index identifier according to an index position of the resource request corresponding to the destination address of the second terminal device in the resource request information list.

In an implementation, the index identifier is determined by a position of the assistance information in the assistance information list.

In a possible implementation, the method further includes: setting the assistance information at a same index position in the assistance information list according to the index position of the resource request corresponding to the destination address of the second terminal device in the resource request information list; in which a length of the assistance information list is the same as a length of the resource request information list.

In an implementation, the assistance information includes a paging identifier of the second terminal device; in which the second terminal device is a remote terminal device.

In an implementation, the assistance information includes a sidelink discontinuous reception (SL DRX) configuration; in which the SL DRX configuration is an SL DRX configuration received by the first terminal device from the second terminal device, and the first terminal device accepts the SL DRX configuration.

In an implementation, the assistance information includes received SL DRX assistance information; in which the SL DRX assistance information is SL DRX assistance information received by the first terminal device from the second terminal device.

In a second aspect, a method for acquiring terminal assistance information is provided according to an embodiment of the present disclosure. The method is performed by a network side device and includes:
receiving a sidelink (SL) resource request information list and an assistance information list sent by a first terminal device; in which the resource request information list includes a resource request of a second terminal device, and the resource request of the second terminal device includes a destination address of the second terminal device; the assistance information list includes assistance information, and the assistance information determines a terminal device identifier corresponding to the assistance information by means of an index identifier;
in which the terminal device identifier corresponding to the assistance information is a destination address in a resource request at a position of the index identifier in the resource request information list.

In an implementation, the assistance information carries the index identifier configured to index the resource request information list.

In an implementation, the index identifier is determined by a position of the assistance information in the assistance information list.

In an implementation, the method further includes: determining the destination address in the resource request at the position of the index identifier in the resource request information list according to the index identifier in the assistance information list received; in which, the assistance information corresponding to the index identifier is applicable to the second terminal device corresponding to the destination address.

In an implementation, the assistance information is a paging identifier, and the method further includes: sending a paging message whose destination address is the paging identifier to the first terminal device for reporting.

In an implementation, the assistance information is a sidelink discontinuous reception (SL DRX) configuration, and the method further includes:
scheduling a sidelink transmitting resource to the second terminal device corresponding to the destination address within an activation time of the second terminal device corresponding to the destination address.

In an implementation, the assistance information is SL DRX assistance information, and the SL DRX assistance information includes a recommended SL DRX configuration; and the method further includes:
determining a SL DRX configuration of the second terminal device corresponding to the destination address according to the SL DRX assistance information.

In a third aspect, a communication device is provided according to an embodiment of the present disclosure. The communication device includes:
a transceiver module, configured to send a sidelink (SL) resource request information list and an assistance information list to a network side device; in which the resource request information list includes a resource request of a second terminal device, and the resource request of the second terminal device includes a destination address of the second terminal device; the assistance information list includes assistance information, and the assistance information determines a terminal device identifier corresponding to the assistance information by means of an index identifier;
in which the terminal device identifier corresponding to the assistance information is a destination address in a resource request at a position of the index identifier in the resource request information list.

In an implementation, the index identifier is carried in the assistance information.

In an implementation, the communication device further includes: a processing module, configured to set the index identifier according to an index position of the resource request corresponding to the destination address of the second terminal device in the resource request information list.

In an implementation, the index identifier is determined by a position of the assistance information in the assistance information list.

In an implementation, the communication device further includes:
a processing module, configured to set the assistance information at a same index position in the assistance information list according to the index position of the resource request corresponding to the destination address of the second terminal device in the resource request information list; in which a length of the assistance information list is the same as a length of the resource request information list.

In an implementation, the assistance information includes a paging identifier of the second terminal device; in which the second terminal device is a remote terminal device.

In an implementation, the assistance information includes a sidelink discontinuous reception (SL DRX) configuration; in which the SL DRX configuration is an SL DRX configuration received by the first terminal device from the second terminal device, and the first terminal device accepts the SL DRX configuration.

In an implementation, the assistance information includes received SL DRX assistance information; in which the SL DRX assistance information is SL DRX assistance information received by the first terminal device from the second terminal device.

In a fourth aspect, a communication device is provided according to an embodiment of the present disclosure. The communication device includes:
a transceiver module, configured to receive a sidelink (SL) resource request information list and an assistance information list sent by a first terminal device; in which the resource request information list includes a resource request of a second terminal device, and the resource request of the second terminal device includes a destination address of the second terminal device; the assistance information list includes assistance information, and the assistance information determines a terminal device identifier corresponding to the assistance information by means of an index identifier;
in which the terminal device identifier corresponding to the assistance information is a destination address in a resource request at a position of the index identifier in the resource request information list.

In an implementation, the assistance information carries the index identifier configured to index the resource request information list.

In an implementation, the index identifier is determined by a position of the assistance information in the assistance information list.

In an implementation, the communication device further includes:
a processing module, configured to determine the destination address in the resource request at the position of the index identifier in the resource request information list according to the index identifier in the assistance information list received; in which, the assistance information corresponding to the index identifier is applicable to the second terminal device corresponding to the destination address.

In an implementation, the assistance information is a paging identifier, and the transceiver module is further configured to send a paging message whose destination address is the paging identifier to the first terminal device for reporting.

In an implementation, the assistance information is a sidelink discontinuous reception (SL DRX) configuration; the transceiver module is configured to schedule a sidelink transmitting resource to the second terminal device corresponding to the destination address within an activation time of the second terminal device corresponding to the destination address.

In an implementation, the assistance information is SL DRX assistance information, and the SL DRX assistance information includes a recommended SL DRX configuration; the processing module is further configured to determine a SL DRX configuration of the second terminal device corresponding to the destination address according to the SL DRX assistance information.

In a fifth aspect, another method for reporting terminal assistance information is provided according to an embodiment of the present disclosure. The method is performed by a first terminal device and includes:
sending a sidelink (SL) resource request information list and an assistance information list to a network side device; in which the resource request information list includes a plurality of resource requests, and one resource request corresponds to one index position, and the assistance information list includes assistance information of the second terminal device, and an index identifier corresponding to the assistance information, in which the index identifier corresponds to an index position corresponding to the resource request.

In this technical solution, a mapping relationship between the assistance information and the destination address of the second terminal device in the resource request information list is established by means of the index identifier corresponding to the assistance information, so that the network side device determines the second terminal device for which the assistance information sent by the first terminal device is applicable according to the mapping relationship. It can be seen that, with an existing destination address field in the resource request information list, indication of the second terminal device for which the assistance information is applicable is realized, which may save a signaling overhead of reporting the assistance information.

In an implementation, the index identifier is carried in the corresponding assistance information.

In a possible implementation, the method further includes: determining the index position of the resource request in the resource request information list; and setting the index identifier corresponding to the assistance information in the assistance information list according to the index position.

In a possible implementation, the method further includes: a length of the assistance information list being the same as a length of the resource request information list; the index position of the resource request in the resource request information list being the same as the index position of the assistance information in the assistance information list.

In an optional implementation, the method further includes: determining the assistance information.

In an optional implementation, the assistance information is one of:
a paging identifier sent by the second terminal device; sidelink discontinuous reception (SL DRX) configuration information sent by the second terminal device; and SL DRX assistance information sent by the second terminal device, in which, the SL The DRX assistance information includes recommended SL DRX configuration information.

In a sixth aspect, a method for acquiring terminal assistance information is provided according to an embodiment of the present disclosure. The method is performed by a network side device and includes:
receiving a sidelink (SL) resource request information list and an assistance information list sent by a first terminal device; in which the resource request information list includes a plurality of resource requests, and one resource request corresponds to one index position, and the assistance information list includes assistance information of the second terminal device, and an index identifier corresponding to the assistance information, in which the index identifier corresponds to an index position corresponding to the resource request;
determining the resource request according to the index identifier;
acquiring the destination address in the resource request, in which, a terminal device with the destination address is the second terminal device.

In this technical solution, a mapping relationship between the assistance information and the destination address of the second terminal device in the resource request information list is established by means of the index identifier corresponding to the assistance information, so that the network side device determines the second terminal device for which the assistance information sent by the first terminal device is applicable according to the mapping relationship. It can be seen that, with an existing destination address field in the resource request information list, indication of the second terminal device for which the assistance information is applicable is realized, which may save a signaling overhead of reporting the assistance information.

In an implementation, the index identifier is carried in the corresponding assistance information.

In a possible implementation, a length of the assistance information list is the same as a length of the resource request information list; the index position of the resource request in the resource request information list is the same as the index position of the assistance information in the assistance information list.

In a possible implementation manner, the assistance information is a paging identifier, and the method further includes: determining a paging message of the paging identifier; sending the paging message to the second terminal device through the first terminal device.

In an optional implementation manner, the assistance information is sidelink discontinuous reception (SL DRX) configuration information, and the method further includes: during an activation time of the second terminal device, scheduling a sidelink transmitting resource to the second terminal device according to the SL DRX configuration information.

In an optional implementation manner, the assistance information is SL DRX assistance information, and the SL DRX assistance information includes recommended SL DRX configuration information; the method further includes: determining SL DRX configuration information of the second terminal device according to the SL DRX assistance information.

In a seventh aspect, a communication device is provided according to embodiments of the present disclosure. The communication device has part of or all functions of a terminal device for implementing the method as described in the first aspect. For example, the functions of the communication device may possess functions in part of or all of embodiments in the disclosure or may possess functions of any one embodiment in the disclosure independently. The functions may be implemented by hardware, or by executing corresponding software by hardware. The software or hardware includes one or more units or modules corresponding to the above functions.

In an implementation, a structure of the communication device may include a transceiver module and a processing module, and the processing module is configured to support the communication device to perform corresponding functions in the foregoing method. The transceiver module is configured to support communication between the communication device and other devices. The communication device may further include a storage module, which is configured to be coupled with the transceiver module and the processing module, and stores necessary computer programs and data of the communication device.

As an example, the processing module may be a processor, the transceiver module may be a transceiver or a communication interface, and the storage module may be a memory.

In an eighth aspect, a communication device is provided according to embodiments of the present disclosure. The communication device has part of or all functions of a terminal device for implementing the method as described in the second aspect. For example, the functions of the communication device may possess functions in part of or all of embodiments in the disclosure or may possess functions of any one embodiment in the disclosure independently. The functions may be implemented by hardware, or by executing corresponding software by hardware. The software or hardware includes one or more units or modules corresponding to the above functions.

In an implementation, a structure of the communication device may include a transceiver module and a processing module, and the processing module is configured to support the communication device to perform corresponding functions in the foregoing method. The transceiver module is configured to support communication between the communication device and other devices. The communication device may further include a storage module, which is configured to be coupled with the transceiver module and the processing module, and stores necessary computer programs and data of the communication device.

As an example, the processing module may be a processor, the transceiver module may be a transceiver or a communication interface, and the storage module may be a memory.

In a nineth aspect, a communication device including a processor is provided according to embodiments of the disclosure. When the processor calls a computer program in a memory, the method according to the first aspect is performed.

In a tenth aspect, a communication device including a processor is provided according to embodiments of the disclosure. When the processor calls a computer program in a memory, the method according to the second aspect is performed.

In an eleventh aspect, a communication device including a processor is provided according to embodiments of the disclosure. When the processor calls a computer program in a memory, the method according to the fifth aspect is performed.

In a twelfth aspect, a communication device including a processor is provided according to embodiments of the disclosure. When the processor calls a computer program in a memory, the method according to the sixth aspect is performed.

In a thirteenth aspect, a communication device including a processor and a memory storing a computer program is provided according to embodiments of the disclosure. The processor is configured to execute the computer program stored on the memory, causing the communication device to perform the method according to the first aspect.

In a fourteenth aspect, a communication device including a processor and a memory storing a computer program is provided according to embodiments of the disclosure. The processor is configured to execute the computer program stored on the memory, causing the communication device to perform the method according to the second aspect.

In a fifteenth aspect, a communication device including a processor and a memory storing a computer program is provided according to embodiments of the disclosure. The processor is configured to execute the computer program stored on the memory, causing the communication device to perform the method according to the fifth aspect.

In a sixteenth aspect, a communication device including a processor and a memory storing a computer program is provided according to embodiments of the disclosure. The processor is configured to execute the computer program stored on the memory, causing the communication device to perform the method according to the sixth aspect.

In a seventeenth aspect, a communication device is provided according to embodiments of the disclosure. The communication device includes a processor and an interface circuit. The interface circuit is configured to receive code instructions and transmit the code instructions to the processor; and the processor is configured to run the code instructions causing the device to perform the method according to the above first aspect.

In an eighteenth aspect, a communication device is provided according to embodiments of the disclosure. The communication device includes a processor and an interface circuit. The interface circuit is configured to receive code instructions and transmit the code instructions to the processor; and the processor is configured to run the code instructions causing the device to perform the method according to the above second aspect.

In a nineteenth aspect, a communication device is provided according to embodiments of the disclosure. The communication device includes a processor and an interface circuit. The interface circuit is configured to receive code instructions and transmit the code instructions to the processor; and the processor is configured to run the code instructions causing the device to perform the method according to the above fifth aspect.

In a twentieth aspect, a communication device is provided according to embodiments of the disclosure. The communication device includes a processor and an interface circuit. The interface circuit is configured to receive code instructions and transmit the code instructions to the processor; and the processor is configured to run the code instructions causing the device to perform the method according to the above sixth aspect.

In a twenty-first aspect, a communication system is provided according to embodiments of the disclosure. The system includes the communication device according to the third aspect and the communication device according to the fourth aspect, or the system includes the communication device according to the seventh aspect and the communication device according to the eighth aspect, or the system includes the communication device according to the ninth aspect and the communication device according to the tenth aspect, or the system includes the communication device according to the eleventh aspect and the communication device according to the twelfth aspect, or the system includes the communication device according to the thirteenth aspect and the communication device according to the fourteenth aspect, or the system includes the communication device according to the fifteenth aspect and the communication device according to the sixteenth aspect, or the system includes the communication device according to the seventeenth aspect and the communication device according to the eighteenth aspect, or the system includes the communication device according to the nineteenth aspect and the communication device according to the twentieth aspect.

In a twenty-second aspect, a computer-readable storage medium is provided according to embodiments of the present disclosure. The computer-readable storage medium is configured to store instructions used for a terminal device. When the instructions are executed, the method as described in the first aspect is implemented by the terminal device.

In a twenty-third aspect, a computer-readable storage medium is provided according to embodiments of the present disclosure. The computer-readable storage medium is configured to store instructions used for a network device. When the instructions are executed, the method as described in the second aspect is implemented by the network device.

In a twenty-fourth aspect, a computer-readable storage medium is provided according to embodiments of the present disclosure. The computer-readable storage medium is configured to store instructions used for a terminal device. When the instructions are executed, the method as described in the fifth aspect is implemented by the terminal device.

In a twenty-fifth aspect, a computer-readable storage medium is provided according to embodiments of the present disclosure. The computer-readable storage medium is configured to store instructions used for a network device. When the instructions are executed, the method as described in the sixth aspect is implemented by the network device.

In a twenty-sixth aspect, a computer program product including a computer program is further provided in the present disclosure. The computer program runs on a computer, causing the computer to perform the method according to the first aspect.

In a twenty-seventh aspect, a computer program product including a computer program is further provided in the present disclosure. The computer program runs on a computer, causing the computer to perform the method according to the second aspect.

In a twenty-eighth aspect, a computer program product including a computer program is further provided in the present disclosure. The computer program runs on a computer, causing the computer to perform the method according to the fifth aspect.

In a twenty-ninth aspect, a computer program product including a computer program is further provided in the present disclosure. The computer program runs on a computer, causing the computer to perform the method according to the sixth aspect.

In a thirtieth aspect, a computer program is provided in the present disclosure. The computer program runs on a computer, causing the computer to perform the method according to the first aspect.

In a thirty-first aspect, a computer program is provided in the present disclosure. The computer program runs on a computer, causing the computer to perform the method according to the second aspect.

In a thirtieth-second aspect, a computer program is provided in the present disclosure. The computer program runs on a computer, causing the computer to perform the method according to the fifth aspect.

In a thirty-third aspect, a computer program is provided in the present disclosure. The computer program runs on a computer, causing the computer to perform the method according to the sixth aspect.

### BRIEF DESCRIPTION OF THE DRAWINGS

In order to explain embodiments of the disclosure or technical solutions in the related art more clearly, the drawings described in the embodiments of the disclosure or required in the related art will be briefly introduced below.
FIG. 1 is a schematic diagram of direct communication terminal information according to an embodiment of the present disclosure.
FIG. 2 is a schematic diagram illustrating an architecture of a communication system according to an embodiment of the present disclosure.
FIG. 3 is a flowchart illustrating a method for reporting terminal assistance information according to an embodiment of the present disclosure.
FIG. 4 is a flowchart illustrating another method for reporting terminal assistance information according to an embodiment of the present disclosure.
FIG. 5 is a flowchart illustrating yet another method for reporting terminal assistance information according to an embodiment of the present disclosure.
FIG. 6 is a flowchart illustrating yet another method for reporting terminal assistance information according to an embodiment of the present disclosure.
FIG. 7 is a flowchart illustrating yet another method for reporting terminal assistance information according to an embodiment of the present disclosure.
FIG. 8 is a flowchart illustrating a method for acquiring terminal assistance information according to an embodiment of the present disclosure.
FIG. 9 is a flowchart illustrating another method for acquiring terminal assistance information according to an embodiment of the present disclosure.
FIG. 10 is a schematic diagram illustrating a structure of a communication device according to an embodiment of the present disclosure.
FIG. 11 is a schematic diagram illustrating a structure of another communication device according to an embodiment of the present disclosure.

### DETAILED DESCRIPTION

Embodiments of the present disclosure are described in detail below, examples of which are shown in the drawings, wherein the same or similar reference numerals denote the same or similar elements or elements having the same or similar functions throughout. The embodiments described below by referring to the figures are exemplary, and are intended to explain the present disclosure, and should not be construed as limiting the present disclosure. Among them, in the description of this disclosure, unless otherwise specified, "/" means or means, for example, A/B can mean A or B; "and/or" in this paper is only a kind of association describing associated objects A relationship means that there may be three kinds of relationships, for example, A and/or B means that: A exists alone, A and B exist simultaneously, and B exists alone.

The terms used in the embodiments of the present disclosure are only for the purpose of describing specific embodiments, and are not intended to limit the embodiments of the present disclosure. The singular forms "a" and "the" used in the embodiments of this disclosure and the appended claims are also intended to include plural forms unless the context clearly indicates otherwise.

It should be understood that, although the terms first, second, third, etc. may be used in embodiments of the present disclosure to describe various information, such information shall not be limited to these terms. These terms are only used to distinguish the same category of information. For example, subject to the scope of embodiments of the present disclosure, first information may also be referred to as second information, and similarly, second information may also be referred to as first information. It depends on the context. For example, the word "in case of', "if' as used herein may be interpreted as "upon" or "when" or "in response to determining".

Embodiments of the present disclosure are described below. Examples of the embodiments are shown in the accompanying drawing, in which the constant same or similar labels indicate the same or similar elements. Embodiments described herein with reference to the drawings are explanatory, serve to explain the disclosure, and are not construed to limit embodiments of the disclosure.

It should be noted that in order to support direct communication between terminal devices, a direct link (also referred to as a sidelink, SL) communication method is introduced, and an interface between the terminal devices is a PC-5 (sidelink communication) interface. The sidelink supports three transceiving modes, such as, unicast, multicast and broadcast, according to a correspondence between a transmitting terminal device and a receiving terminal device.

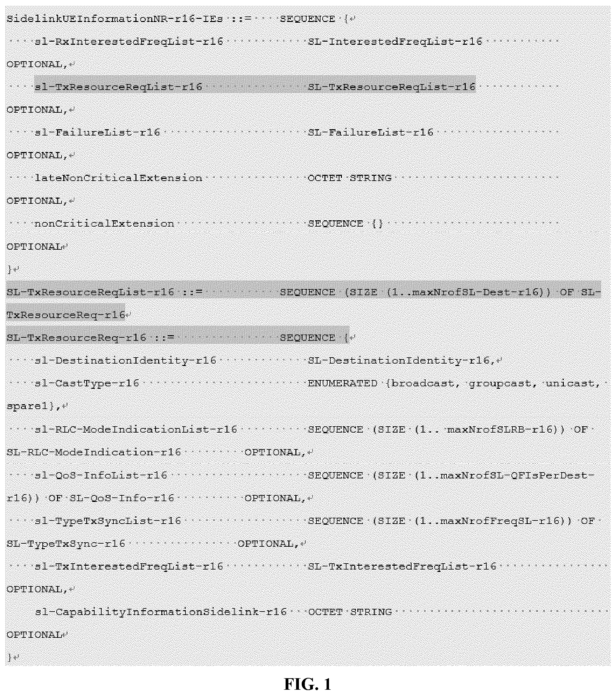

A first terminal device in a connected state needs to send a SidelinkUEInformation (sidelink communication terminal information) message, which includes a sidelink (SL) resource request information list, to a network-side device (such as a base station) during sidelink communication. As shown in FIG. 1, each element in the SL resource request information list is a SL resource request of a second terminal device, and the resource request includes a destination address of the second terminal device, a corresponding transceiving mode (including unicast, multicast and broadcast), a quality of service (QoS) and a target transmitting frequency.

It is worth noting that at present, one terminal device may not be directly connected to a base station, but communicate with the base station through relay of another terminal device. The terminal device that is not connected to the base station is called as a remote terminal device (a remote UE). A terminal device that provides a relay function is called as a relay terminal device (relay UE). The remote terminal device communicates with the relay terminal device through sidelink unicast communication.

It can be understood that a paging message sent by the network side device to the second terminal device (such as the remote terminal device) can be sent to the first terminal device (such as the relay terminal device) through a dedicated signaling, and then forwarded by the first terminal device to the second terminal device. The first terminal device needs to report a paging identifier of the second terminal device to the network side device. The paging identifier may be NG-5G-S-TMSI or I-RNTI.

In order to save a device power consumption of the terminal device when performing sidelink communication, sidelink discontinuous reception (DRX) is introduced. The receiving terminal device listens a physical sidelink control channel (PSCCH) only during an activation time, to achieve a purpose of energy saving.

Unicast sidelink discontinuous reception (SL DRX) configuration information is sent by the transmitting terminal device to the receiving terminal device, and the receiving terminal device can send the SL DRX assistance information to the transmitting terminal device. The SL DRX assistance information includes recommended SL DRX configuration information. In a case that the receiving terminal device is in the connected state, the receiving terminal device reports the received SL DRX configuration information to the base station. The base station can adjust a Uu (cellular network communication interface) DRX, to overlap the SL DRX and the Uu DRX overlap as much as possible, achieving a purpose of saving power. In a case that the transmitting terminal device is in the connected state, the transmitting terminal device reports the received SL DRX assistance information to the base station. The base station determines a SL DRX configuration according to the SL DRX assistance information.

In related arts, as shown in FIG. 1, when the first terminal device reports the sidelink resource request information list to the network side device, an identifier of the second terminal device in unicast connection is indicated by using a destination address field in a resource request in the sidelink resource request information list. However, a signaling of the sidelink resource request information list cannot be expanded at present, then a field for indicating assistance information, such as a paging identifier, sidelink discontinuous reception (SL DRX) assistance information, and a SL DRX configuration, etc., cannot be added to the sidelink resource request information list. In a case that a destination address (also referred to as an identifier) of the second terminal device is added to the assistance information such as the paging identifier, the SL DRX assistance information, and the SL DRX configuration reported by the first terminal device, a large amount of signaling overhead may be increased. Therefore, how to indicate the assistance information such as the paging identifier, the SL DRX assistance information, and the SL DRX configuration to achieve a purpose of reducing the signaling overhead has become an urgent problem to be solved.

Based on the above problem, the present disclosure provides a method for reporting terminal assistance information, a method for acquiring terminal assistance information and an apparatus thereof, with an existing destination address field in the resource request information list, indication of the second terminal device for which the assistance information is applicable is realized, which may save a signaling overhead of reporting the assistance information.

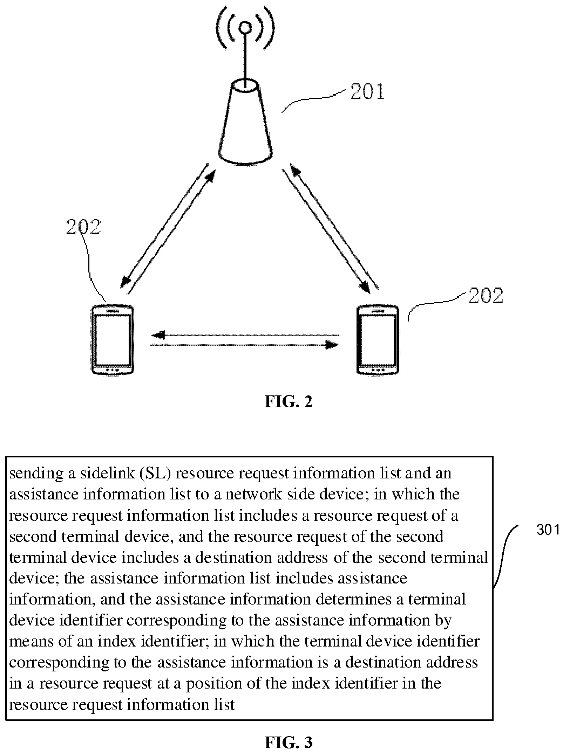

FIG. 2 is a schematic diagram illustrating an architecture of a communication system according to an embodiment of the present disclosure. The communication system may include, but is not limited to, one network device and two terminal devices. A number and a form of devices as shown in FIG. 2 are only for example and do not constitute a limitation of embodiments of the present disclosure. In actual disclosures, the communication system may include two or more network devices and two or more terminal devices. The communication system as illustrated in FIG. 2 includes one network device 201 and two terminal devices 202 as an example. The terminal device 202 is a sidelink terminal device.

It needs to be noted that the technical solution in embodiments of the present disclosure is applicable for various communication systems, for example, a long term evolution (LTE) system, a 5th generation (5G) mobile communication system, a 5G new radio (NR) system or other future new mobile communication systems, etc. It should also be noted that a sidelink in an embodiment of the present disclosure may also be referred to as a side link or a direct link.

The network device 201 in embodiments of the disclosure is an entity for transmitting or receiving a signal at a network side. For example, the network device 201 may be an evolved NodeB (eNB), a transmission reception point (TRP), a next generation NodeB (gNB) in a NR system, a base station in other future mobile communication systems, or an access node in a wireless fidelity (WiFi) system, etc. A specific technology and a specific device form adopted by the network device are not limited in embodiments of the present disclosure. The network device according to embodiments of the present disclosure may consist of a central unit (CU) and a distributed unit (DU). The CU may also be referred to as a control unit, and a structure of the CU-DU are used to separate the network device such as a protocol layer of a base station, and functions of a part of the protocol layer are placed in the CU for centralized control, and functions of a remaining part or all of the protocol layer are distributed in the DU, and the DU is centrally controlled by the CU.

The terminal device 202 in embodiments of the disclosure is an entity for receiving or transmitting a signal at a user side, and for example, a mobile phone. The terminal device may be referred to as a terminal, a user equipment (UE), a mobile station (MS), a mobile terminal (MT), etc. The terminal device may be an automobile with a communication function, a smart automobile, a mobile phone, a wearable device, a tablet computer (Pad), a computer with a wireless transceiving function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in transportation safety, a wireless terminal device in a smart city, a wireless terminal device in a smart home, etc. A specific technology and a specific device form adopted by the terminal device are not limited in embodiments of the present disclosure.

In sidelink communication, there are 4 sidelink transmitting modes. A sidelink transmitting mode 1 and a sidelink transmitting mode 2 are used for device-to-device (D2D) communication. A sidelink transmitting mode 3 and a sidelink transmitting mode 4 are used for V2X communication. When the sidelink transmitting mode 3 is adopted, resource allocation is scheduled by the network device 201. Specifically, the network device 201 can send resource allocation information to the terminal device 202, and then the terminal device 202 allocates resources to another terminal device, so that another terminal device can send information to the network device 201 through the allocated resources. In the V2X communication, a terminal device with better signal or higher reliability may be used as the terminal device 202.

It may be understood that the communication system described in embodiments of the present disclosure are intended to explain the technical solution of embodiments of the present disclosure more clearly, and does not constitute a limitation to the technical solution provided by embodiments of the present disclosure. Those skilled in the art know that, with evolution of a system architecture and emergence of a new service scenario, the technical solution provided in embodiments of the present disclosure are equally applied to a similar technical problem.

A method for reporting terminal assistance information, a method for acquiring terminal assistance information and an apparatus thereof according to the present disclosure are described in detail below with reference to the accompanying drawings.

Referring to FIG. 3, FIG. 3 is a flowchart illustrating a method for reporting terminal assistance information according to an embodiment of the present disclosure. It should be noted that the method for reporting terminal assistance information in an embodiment of the present disclosure may be performed by a first terminal device. As shown in FIG. 3, the method for reporting terminal assistance information may include, but is not limited to, the following step.

At step S301, a sidelink (SL) resource request information list and an assistance information list are sent to a network side device; in which the resource request information list includes a resource request of a second terminal device, and the resource request of the second terminal device includes a destination address of the second terminal device; the assistance information list includes assistance information, and the assistance information determines a terminal device identifier corresponding to the assistance information by means of an index identifier; in which the terminal device identifier corresponding to the assistance information is a destination address in a resource request at a position of the index identifier in the resource request information list.

In some embodiments of the present disclosure, the assistance information in the assistance information list reported may be a paging identifier, or may also be sidelink discontinuous reception (SL DRX) assistance information, or may also be an SL DRX configuration, etc.

In an implementation, a length of the assistance information list may be 1. That is, the first terminal device may report the assistance information list to the network side device, and the assistance information list may include one or more assistance information. Each assistance information in the assistance information list may determine a UE identifier to which the assistance information applies by means of an index representation. The UE identifier may be the destination address in the resource request at the position of the index identifier in the resource request information list.

It can be understood that the first terminal device in a connected state needs to send a SidelinkUEInformation (sidelink communication terminal information) message, which includes the sidelink resource request information list, to a network side device (such as a base station) during sidelink communication. Each element in the resource request information list is the resource request of the second terminal device, and the resource request includes the destination address of the second terminal device, a corresponding transmitting mode (including unicast, multicast and broadcast), a quality of service (QoS) and a target transmitting frequency. In an embodiment of the present disclosure, when reporting the assistance information to the network side device, the first terminal device establishes a mapping relationship between the assistance information and the destination address of the second terminal device in the resource request information list by means of the index identifier corresponding to the assistance information, so that the network side device determines the second terminal device for which the assistance information sent by the first terminal device is applicable according to the mapping relationship. It can be seen that, with an existing destination address field in the resource request information list, indication of the second terminal device for which the assistance information is applicable is realized.

It should be noted that in some embodiments of the present disclosure, settings if the index identifier can be various. For example, the index identifier can be carried in the corresponding assistance information, or the index identifier corresponding to the assistance information can also be set based on the index position of the resource request in the resource request information list. Examples will be given below to respectively describe establishing the mapping relationship between the assistance information and the destination address of the second terminal device in the resource request information list by using the index identifier under different settings of the index identifier.

As an example of a possible implementation, assuming that the resource request information list (such as SL- TxResourceReqList - r 16) reported by the first terminal device includes four elements, as shown in Table 1 below.

**Table 1 Elements included in resource request information list**

| | SL-DestinationIdentity-r16 | | Other info | |
|---|---|---|---|---|
| SL-TxResourceReqList-r16 | | 00000000 | | ...... |
| | | 00000001 | | ...... |
| | | 00000010 | | ...... |
| | | 00000011 | | ...... |

Assuming that the assistance information to be reported by the first terminal device is the SL DRX configuration information, the reported SL DRX configuration information can be as follows: for a second terminal device with destination address (also called identifier) being 00000001, the SL DRX configuration information is A; for a second terminal device with destination address (also called identifier) being 00000011, the SL DRX configuration information is B. Due to difference settings of the index identifier, forms of the assistance information list reported by the first terminal device to the network side device may also be different.

In an implementation, the index identifier is carried in the corresponding assistance information. In this case, the first terminal device may set the index identifier according to an index position of a transmitting resource request corresponding to the destination address of the second terminal device in the resource request information list. In this implementation, the assistance information list reported by the first terminal device to the network side device may be shown in Table 2 below:

**Table 2 Assistance information list**

| | index identifier | SL DRX configuration |
|---|---|---|
| Assistance information list | 2 | A |
| | 4 | B |

It can be seen from Table 1 and Table 2 that SL-DestinationIdentity-r16 of a UE with the SL DRX configuration being A in the reported assistance information list is SL-DestinationIdentity-r16 of a second (index identifier) entry in the resource request information list (such as SL-TxResourceReqList-r16), that is 00000001. By analogy, SL-DestinationIdentity-r16 of a UE with the SL DRX configuration being B in the reported assistance information list is SL-DestinationIdentity-r16 of a fourth (index identifier) entry in the resource request information list (such as SL-TxResourceReqList-r16), that is 00000011.

In another implementation manner, the index identifier in an embodiment of the present disclosure is determined based on a position of the assistance information in the assistance information list. In this case, the first terminal device needs to set the assistance information at a same index position in the assistance information list according to the index position of the resource request corresponding to the destination address of the second terminal device in the resource request information list; in which a length of the assistance information list is the same as a length of the resource request information list. In a case that a certain destination UE has no assistance information, it should be set as null, and an entry still needs to be reserved. In this implementation, the assistance information list reported by the first terminal device to the network side device may be shown in Table 3 below.

**Table 3 Assistance information list**

| | SL DRX configuration | |
|---|---|---|
| Assistance information list | | null |
| | | A |
| | | null |
| | | B |

For the SL DRX configuration being A in Table 3, it is first determined that the index identifier of A is its index position in the assistance information list, that is, the second, and then the UE identifier of A is obtained based on the index identifier, that is, SL-DestinationIdentity-r16 of a UE with the SL DRX configuration being A in the reported assistance information list is SL-DestinationIdentity-r16 of the second (index identifier) entry in the resource request information list (such as SL-TxResourceReqList-r16), that is 00000001.

By analogy, for the SL DRX configuration being B in Table 3, it is first determined that the index identifier of B is its index position in the assistance information list, that is, the fourth, and then the UE identifier of B is obtained based on the index identifier, that is, SL-DestinationIdentity-r16 of a UE with the SL DRX configuration being B in the reported assistance information list is SL-DestinationIdentity-r16 of the fourth (index identifier) entry in the resource request information list (such as SL-TxResourceReqList-r16), that is 00000011.

In some embodiments of the present disclosure, the assistance information in the reported assistance information list may be a paging identifier, or may also be sidelink discontinuous reception (SL DRX) assistance information, or may also be a SL DRX configuration, etc. In an implementation, the assistance information may include a paging identifier of the second terminal device, where the second terminal device is a remote terminal device.

That is, when the first terminal device is a relay UE, the assistance information in the reported assistance information list may include the paging identifier of the second terminal device. For example, when the first terminal device is the relay UE, the relay UE needs to report the paging identifier of the second terminal device (such as the remote UE) to the network side device, so that the network side device may send the paging message for sending to the second terminal device to the relay UE, and the relay UE may forward the paging message to the second terminal device.

In an implementation, the assistance information may include the sidelink discontinuous reception (SL DRX) configuration; in which the SL DRX configuration is an SL DRX configuration received by the first terminal device from the second terminal device, and the first terminal device accepts the SL DRX configuration.

That is, when the first terminal device receives the SL DRX configuration sent by the second terminal device and the first terminal device accepts the SL DRX configuration, the assistance information in the assistance information list reported by the first terminal device may also include the SL DRX configuration.

In an implementation, the assistance information includes received SL DRX assistance information; in which the SL DRX assistance information is SL DRX assistance information received by the first terminal device from the second terminal device.

That is, when the first terminal device receives the SL DRX assistance information sent by the second first terminal device, the assistance information in the assistance information list reported by the first terminal device may also include the received SL DRX assistance information.

By implementing embodiments of the present disclosure, when reporting the terminal assistance information, the identifier of the terminal device UE for which the terminal assistance information is applicable can be determined through the index identifier, and the identifier of the terminal device UE is the destination address in the sending resource request at the position of the index identifier in the resource request information list. It can be seen that an embodiment of the present disclosure establishes the mapping relationship between the assistance information and the destination address of the peer terminal device UE in the resource request information list through the index identifier, thus realizing indication for the peer terminal device when reporting the terminal assistance information, which can save a signaling overhead of reporting the terminal assistance information.

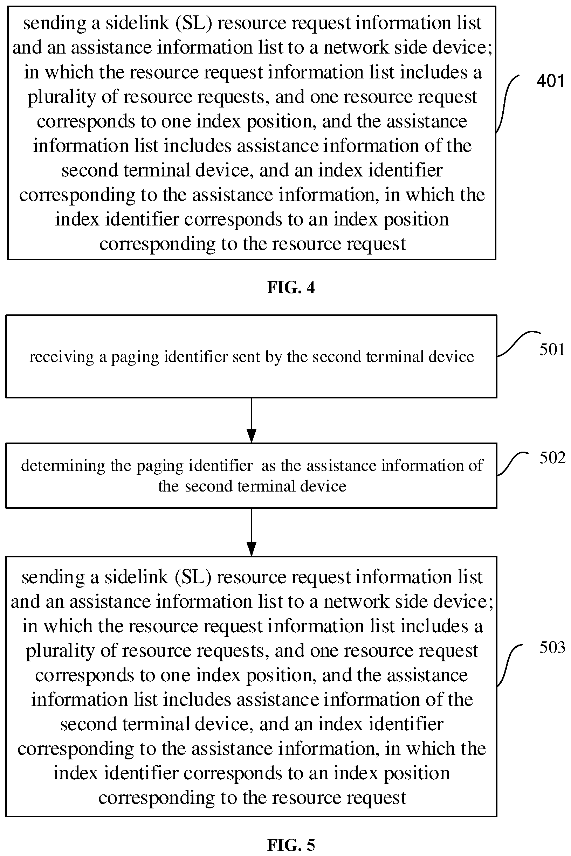

Referring to FIG. 4, FIG. 4 is a flowchart illustrating a method for reporting terminal assistance information according to an embodiment of the present disclosure. It should be noted that the method for reporting terminal assistance information in an embodiment of the present disclosure may be performed by a first terminal device. As shown in FIG. 4, the method for reporting terminal assistance information may include, but is not limited to, the following steps.

At step 401, a sidelink (SL) resource request information list and an assistance information list are sent to a network side device; in which the resource request information list includes a plurality of resource requests, and one resource request corresponds to one index position, and the assistance information list includes assistance information of the second terminal device, and an index identifier corresponding to the assistance information, in which the index identifier corresponds to an index position corresponding to the resource request.

In some embodiments of the present disclosure, the assistance information in the assistance information list reported may be a paging identifier, or may also be sidelink discontinuous reception (SL DRX) assistance information, or may also be an SL DRX configuration, etc.

In an implementation, a length of the assistance information list may be 1. That is, in addition to sending the SL resource request information list to the network side device, the first terminal device may also send the assistance information list to the network side device, and the assistance information list may include the assistance information of one or more second terminal devices, and the index identifier corresponding to the assistance information, where the index identifier corresponds to the index position of the resource request in the resource request information list. Since the resource request includes the destination address of the second terminal device, after receiving the resource request information list and the assistance information list reported by the first terminal device, the network side device can implement indication of the second terminal device for which each assistance information in the assistance information list is applicable by using an existing destination address field in the resource request information list, thus saving a signaling overhead of reporting the assistance information.

It can be understood that the first terminal device in a connected state needs to send a SidelinkUEInformation message, which includes the sidelink resource request information list, to the network side device (such as a base station) during sidelink communication. Each element in the resource request information list is the resource request of the second terminal device, and the resource request includes the destination address of the second terminal device, a corresponding transmitting mode (including unicast, multicast and broadcast), a quality of service (QoS) and a target transmitting frequency. In an embodiment of the present disclosure, when reporting the assistance information to the network side device, the first terminal device establishes a mapping relationship between the assistance information and the destination address of the second terminal device in the resource request information list by means of the index identifier corresponding to the assistance information, so that the network side device determines the second terminal device for which the assistance information sent by the first terminal device is applicable according to the mapping relationship. It can be seen that, with an existing destination address field in the resource request information list, indication of the second terminal device for which the assistance information is applicable is realized.

It should be noted that in some embodiments of the present disclosure, settings if the index identifier can be various. For example, the index identifier can be carried in the corresponding assistance information, or the index identifier corresponding to the assistance information can also be set based on the index position of the resource request in the resource request information list. Examples will be given below to respectively describe establishing the mapping relationship between the assistance information and the destination address of the second terminal device in the resource request information list by using the index identifier under different settings of the index identifier.

As an example of a possible implementation, assuming that the resource request information list (such as SL- TxResourceReqList - r 16) reported by the first terminal device includes four elements, as shown in Table 1 above. Assuming that the assistance information to be reported by the first terminal device is the SL DRX configuration information, the reported SL DRX configuration information can be as follows: for a second terminal device with destination address (also called identifier) being 00000001, the SL DRX configuration information is A; for a second terminal device with destination address (also called identifier) being 00000011, the SL DRX configuration information is B. Due to difference settings of the index identifier, forms of the assistance information list reported by the first terminal device to the network side device may also be different.

In an implementation, the index identifier is carried in corresponding assistance information. In this case, the first terminal device may determine an index position of the resource request in the resource request information list, and set the index identifier corresponding to the assistance information in the assistance information list according to the index position. After setting the index identifier corresponding to the assistance information in the assistance information list according to the index position, the first terminal device may send the set assistance information list and the resource request information list to the network side device.

For example, a form of the assistance information list reported by the first terminal device to the network side device may be as shown in Table 2 above. It can be seen from Table 1 and Table 2 that the destination address of the second terminal device for which the SL DRX configuration information A is applicable in the reported assistance information list is the destination address whose index position is 2 in the resource request information list (such as SL-TxResourceReqList-r16), that is, 00000001. By analogy, the destination address of the second terminal device for which SL DRX configuration B is applicable in the reported assistance information list is the destination address whose index position is 4 in the resource request information list (such as SL-TxResourceReqList-r16), that is, 00000011. After receiving the resource request information list and the assistance information list sent by the first terminal device, the network side device can determine the resource request at the index position in the resource request information list according to the index identifier corresponding to the assistance information in the assistance information list, and obtain the destination address in the resource request at the index position. The terminal device with the destination address is the second terminal device to which the assistance information applies.

For example, assuming that the resource request information list sent by the first terminal device is as shown in the above Table 1, and the sent assistance information list is as shown in the above Table 2, the network side device can determine the resource request at index position being 2 in the resource request information list based on the index identifier "2" corresponding to the assistance information, so that the network side device can understand that the terminal device to which the assistance information (i.e. SL DRX configuration information in Table 2 is A) applies is the second terminal device with the destination address "00000001". By analogy, the network side device can determine the resource request at index position being 4 in the resource request information list based on the index identifier "4" corresponding to the assistance information, so that the network side device can understand that the terminal device to which the assistance information (i.e. SL DRX configuration information in Table 2 is B) applies is the second terminal device with the destination address "00000011"

In another implementation, a length of the assistance information list being the same as a length of the resource request information list; the index position of the resource request in the resource request information list being the same as the index position of the assistance information in the assistance information list. The index identifier corresponding to the assistance information may be an index position of the assistance information in the assistance information list. That is, the first terminal device needs to set the assistance information of the second terminal device at the same index position in the assistance information list according to the index position of the resource request of the second terminal device in the resource request information list. In a case that a certain second terminal device has no assistance information, the corresponding position in the assistance information list is set as null.

For example, the assistance information list reported by the first terminal device to the network side device may be shown in Table 3 below.

**Table 3 Assistance information list**

| | SL DRX configuration | |
|---|---|---|
| Assistance information list | | null |
| | | A |
| | | null |
| | | B |

That is, the length of the assistance information list set by the first terminal device is the same as the length of the resource request information list, and the length of both is 4. Assuming that the terminal device for which SL DRX configuration information A is applicable is the second terminal device with the destination address of 00000001, the terminal device for which SL DRX configuration information B is applicable is the second terminal device with the destination address of 00000011. The first terminal device needs to set the SL DRX configuration information A at the position whose index position is 2 in the assistance information list according to the index position (for example, 2) of the resource request of the second terminal device in the resource request information list. By analogy, the first terminal device needs to set the SL DRX configuration information B at the position whose index position is 4 in the assistance information list according to the index position (for example, 4) of the resource request of the second terminal device in the resource request information list. Other second terminal devices in the resource request information list have no assistance information, the corresponding positions in the assistance information list are set as null, that is, the form of the assistance information list set by the first terminal device can be shown as in Table 3 above. After setting the assistance information at the same index position in the assistance information list according to the index position of the resource request in the resource request information list, the first terminal device sends the set assistance information list and the resource request information list to the network side device.

In this example, after receiving the resource request information list and the assistance information list sent by the first terminal device, the network side device can determine the resource request at the index position in the resource request information list based on the index identifier corresponding to the assistance information in the assistance information list, and obtain the destination address in the resource request at the index position. The terminal device with the destination address is the second terminal device for which the assistance information is applicable. For example, assuming that the resource request information list sent by the first terminal device is as shown in the above Table 1, and the sent assistance information list is as shown in the above Table 3, the network side device can determine the resource request whose index position is 2 in the resource request information list according to the index identifier "2" corresponding to the assistance information (i.e., the position of the assistance information in the assistance information list), so that the network side device can understand the terminal device to which the assistance information (that is, the SL DRX configuration information in the above table 3 is A) is applied is the second terminal with the destination address "00000001". By analogy, the network-side device can determine the resource request whose index position is 4 in the resource request information list according to the index identifier "4" corresponding to the assistance information, so that the network-side device can understand the terminal device to which the assistance information (that is, the SL DRX configuration information in the above table 3 is B) is applied is the second terminal with the destination address "00000011".

By implementing embodiments of the present disclosure, a mapping relationship between the assistance information and the destination address of the second terminal device in the resource request information list is established by means of the index identifier corresponding to the assistance information, so that the network side device determines the second terminal device for which the assistance information sent by the first terminal device is applicable according to the mapping relationship. It can be seen that, with an existing destination address field in the resource request information list, indication of the second terminal device for which the assistance information is applicable is realized, which may save a signaling overhead of reporting the assistance information.

It should be noted that, in some embodiments of the present disclosure, the assistance information in the reported assistance information list may be the paging identifier, or may also be the SL DRX assistance information, or may also be the SL DRX configuration information and the like. It can be understood that, depending on different content of the assistance information reported by the first terminal device to the network side device, a role played by the first terminal device and the second terminal device will also be different. For example, when the assistance information sent by the first terminal device to the network side device is the paging identifier, the first terminal device is the relay terminal device, and the second terminal device is the remote terminal device. For another example, when the assistance information sent by the first terminal device to the network side device is the SL DRX assistance information, the first terminal device is the transmitting terminal device, and the second terminal device is the receiving terminal device. For another example, when the assistance information sent by the first terminal device to the network side device is the SL DRX configuration information, the first terminal device is the receiving terminal device, and the second terminal device is the transmitting terminal device. A detailed description will be given below in combination with embodiments.

Referring to FIG. 5, FIG. 5 is a flowchart illustrating a method for reporting terminal assistance information according to an embodiment of the present disclosure. It should be noted that the method for reporting terminal assistance information in an embodiment of the present disclosure may be performed by a first terminal device. The assistance information is a paging identifier. As shown in FIG. 5, the method for reporting terminal assistance information may include, but is not limited to, the following steps.

At step 501, a paging identifier sent by a second terminal device is received.

Optionally, in an embodiment of the present disclosure, the first terminal device is a relay terminal device, and the second terminal device is a remote terminal device. When the second terminal device sends the paging request to the network side device, the second terminal device sends its own paging identifier to the first terminal device. The first terminal device can receive the paging identifier sent by the second terminal device, so that the first terminal device can send the paging identifier to the network side device, so that the network side device can send a paging message of the paging identifier to the second terminal device through the first terminal device.

At step 502, the paging identifier is determined as assistance information of the second terminal device.

Optionally, after receiving the paging identifier sent by the second terminal device, the first terminal device may determine the paging identifier as the assistance information of the second terminal device. Since the first terminal device also needs to report the resource request information list to the network side device to realize configuration of the sidelink resource of the second terminal device in the list by the network side device, the first terminal device can use the destination address of the second terminal device in the resource request information list to indicate which specific second terminal device the paging identifier is applicable to.

In an implementation, after using the paging identifier as the assistance information of the second terminal device, the first terminal device may determine an index position of the sidelink resource request of the second terminal device in the resource request information list, and set the index identifier corresponding to the paging identifier in the assistance information list according to the index position, to set the paging identifier and its corresponding index identifier in the assistance information list.

For example, assuming that the resource request information list (such as SL-TxResourceReqList-r16) to be reported by the first terminal device includes four elements, as shown in Table 1 above. Assuming that the assistance information received by the first terminal device is a paging identifier C sent by the second terminal device with the destination address "00000001" and a paging identifier D sent by the second terminal device with the destination address "00000011". The first terminal device may determine that the index position of the resource request of the second terminal device with the destination address "00000001" in the resource request information list is 2, and set the index identifier corresponding to the paging identifier C in the assistance information list according to the index position, that is, the index identifier is 2, and the form of the paging identifier C and the index identifier in the assistance information list can be shown in Table 4 below. The first terminal device may determine that the index position of the resource request of the second terminal device with the destination address "00000011" in the resource request information list is 4, and set the index identifier corresponding to the paging identifier D in the assistance information list according to the index position, that is, the index identifier is 4, and the form of the paging identifier D and the index identifier in the assistance information list can be shown in Table 4 below. The first terminal device sets the paging identifier C and its corresponding index identifier and the paging identifier D and its corresponding index identifier in the assistance information list, and the form of the assistance information list may be shown in Table 4.

**Table 4 Assistance information list**

| | index identifier | paging identifier |
|---|---|---|
| Assistance information list | 2 | C |
| | 4 | D |

In another implementation, after determining the paging identifier as the assistance information of the second terminal device, the first terminal device may set the corresponding assistance information at the same index position in the assistance information list according to the index position of the resource request in the resource request information list. The index identifier corresponding to the assistance information corresponds to the index position of the assistance information in the assistance information list. The length of the assistance information list is the same as the length of the resource request information list.

For example, assuming that the SL resource request information list (such as SL-TxResourceReqList-r16) to be reported by the first terminal device includes four elements, as shown in Table 1 above. Assuming that the assistance information received by the first terminal device is the paging identifier C sent by the second terminal device with the destination address "00000001" and the paging identifier D sent by the second terminal device with the destination address "00000011". The first terminal device may determine that the index position of the resource request of the second terminal device with the destination address "00000001 "in the resource request information list is 2, and set the paging identifier C at the same index position in the assistance information list according to the index position, as shown in Table 5 below, the paging identifier C is set at a position where the index position is 2 in the assistance information list. The first terminal device may determine that the index position of the resource request of the second terminal device with the destination address "00000011" in the resource request information list is 4, and set the paging identifier D at the same index position in the assistance information list according to the index position, as shown in Table 5 below, the paging identifier D is set at a position where the index position in the assistance information list is 4.

**Table 5 Assistance information list**

| | paging identifier | |
|---|---|---|
| Assistance information list | | null |
| | | C |
| | | null |
| | | D |

At step 503, the sidelink (SL) resource request information list and the assistance information list are sent to the network side device.

In an embodiment of the present disclosure, the resource request information list includes a plurality of resource requests, and one resource request corresponds to one index position, and the assistance information list includes the assistance information of the second terminal device, and the index identifier corresponding to the assistance information, in which the index identifier corresponds to the index position corresponding to the resource request.

That is, after receiving the paging identifier sent by the second terminal device, the first terminal device can determine the paging identifier as the assistance information of the second terminal device, and establish a mapping relationship between the assistance information and the destination address of the second terminal device in the resource request information list by means of the index identifier corresponding to the assistance information, so that the network side device determines the second terminal device for which the assistance information sent by the first terminal device is applicable according to the mapping relationship. It can be seen that, with an existing destination address field in the resource request information list, indication of the second terminal device for which the assistance information is applicable is realized, which may save a signaling overhead of reporting the assistance information.

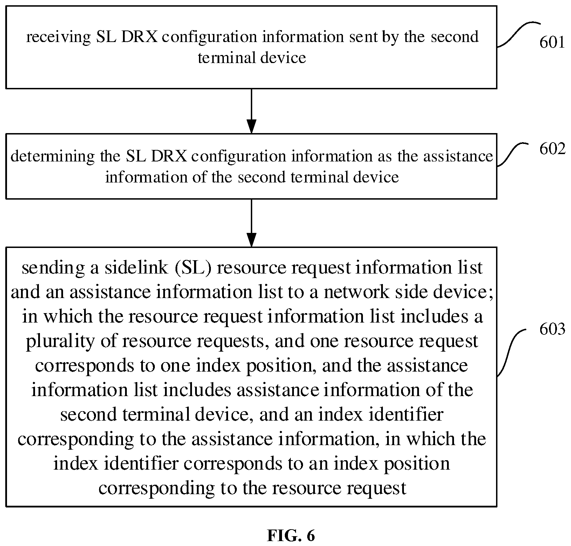

Referring to FIG. 6, FIG. 6 is a flowchart illustrating a method for reporting terminal assistance information according to an embodiment of the present disclosure. It should be noted that the method for reporting terminal assistance information in an embodiment of the present disclosure may be performed by a first terminal device. The assistance information is SL DRX configuration information. As shown in FIG. 6, the method for reporting terminal assistance information may include, but is not limited to, the following steps.

At step 601, SL DRX configuration information sent by the second terminal device is received.

Optionally, in an embodiment of the present disclosure, the first terminal device is a receiving terminal device, and the second terminal device is a transmitting terminal device. In order to achieve a purpose of power saving, a network side device (such as a base station) can adjust Uu DRX according to the SL DRX configuration information of a sidelink terminal device, to overlap the SL DRX and the Uu DRX as much as possible, so as to achieve a purpose of power saving. In this scenario, the first terminal device may receive the SL DRX configuration information sent by the second terminal device, and the second terminal device may determine whether to accept the SL DRX configuration information. When the first terminal device determines to accept the SL DRX configuration information, the first terminal device needs to report the SL DRX configuration information to the network side device, so that the network side device adjusts the Uu DRX, to overlap the SL DRX and the Uu DRX as much as possible, to achieve the purpose of power saving.

At step 602, the SL DRX configuration information is determined as the assistance information of the second terminal device.

Optionally, after receiving the SL DRX configuration information sent by the second terminal device, the first terminal device may determine the SL DRX configuration information as the assistance information of the second terminal device. The first terminal device needs to report the resource request information list to the network side device to implement configuration of the sidelink resource of the second terminal device in the list by the network side device, thus, the first terminal device can indicate the terminal device of the SL DRX configuration information by using the destination address of the second terminal device in the resource request information list.

An implementation of setting the assistance information list when the assistance information is the SL DRX configuration information is similar to an implementation of setting the assistance information list when the assistance information is the paging identifier. In an implementation, after determining the SL DRX configuration information as the assistance information of the second terminal device, the first terminal device may determine the index position of the sidelink resource request of the second terminal device in the resource request information list, and set the index identifier corresponding to the SL DRX configuration information in the assistance information list according to the index position, to set the SL DRX configuration information and its corresponding index identifier in the assistance information list.

In another implementation, after determining the SL DRX configuration information as the assistance information of the second terminal device, the first terminal device may set the assistance information at the same index position in the assistance information list according to the index position of the resource request in the resource request information list. The index identifier corresponding to the assistance information is the index position of the assistance information in the assistance information list. The length of the assistance information list is the same as the length of the resource request information list.

At step 603, the SL resource request information list and the assistance information list are sent to the network side device.

In an embodiment of the present disclosure, the resource request information list includes the plurality of resource requests, and one resource request corresponds to one index position, and the assistance information list includes the assistance information of the second terminal device, and the index identifier corresponding to the assistance information, in which the index identifier corresponds to the index position corresponding to the resource request.

That is, after receiving the SL DRX configuration information sent by the second terminal device, the first terminal device may determine the SL DRX configuration information as the assistance information of the second terminal device when the first terminal device is in the connected state, and establish a mapping relationship between the assistance information and the destination address of the second terminal device in the resource request information list by means of the index identifier corresponding to the assistance information, so that the network side device determines the second terminal device for which the assistance information sent by the first terminal device is applicable according to the mapping relationship. It can be seen that, with an existing destination address field in the resource request information list, indication of the second terminal device for which the assistance information is applicable is realized, which may save a signaling overhead of reporting the assistance information.

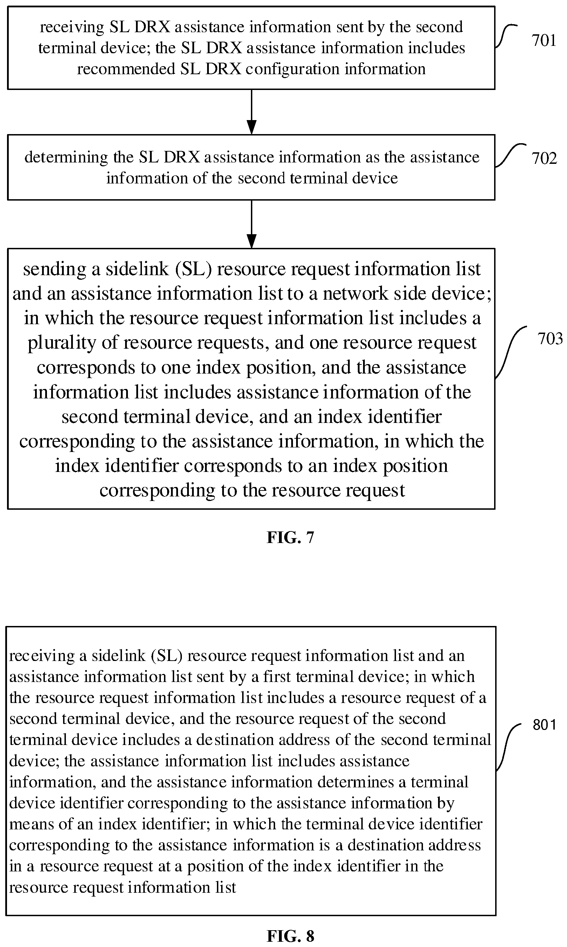

Referring to FIG. 7, FIG. 7 is a flowchart illustrating a method for reporting terminal assistance information according to an embodiment of the present disclosure. It should be noted that the method for reporting terminal assistance information in an embodiment of the present disclosure may be performed by a first terminal device. The assistance information is SL DRX assistance information. As shown in FIG. 7, the method for reporting terminal assistance information may include, but is not limited to, the following steps.

At step 701, SL DRX assistance information sent by the second terminal device is received. The SL DRX assistance information includes recommended SL DRX configuration information.

Optionally, in an embodiment of the present disclosure, the first terminal device is a transmitting terminal device, and the second terminal device is a receiving terminal device. In order to achieve a purpose of power saving, a network side device (such as a base station) can adjust Uu DRX according to the SL DRX configuration information of a sidelink terminal device, to overlap the SL DRX and the Uu DRX as much as possible, to achieve a purpose of power saving. The SL DRX configuration information may be recommended SL DRX configuration information in the SL DRX assistance information sent by the receiving terminal device.

For example, since a unicast SL DRX is sent by the transmitting terminal device (such as the first terminal device described in embodiments of the present disclosure) to the receiving terminal device (such as the second terminal device described in embodiments of the present disclosure), the receiving terminal device may send the SL DRX assistance information to the transmitting terminal device, the SL DRX assistance information includes the recommended SL DRX configuration information, so that when the transmitting terminal device is in the connected state, the transmitting terminal device reports the received SL DRX assistance information to the network side device (such as the base station), to enable the network side device (such as the base station) to determine the SL DRX configuration according to the SL DRX assistance information.

At step 702, the SL DRX assistance information is determined as the assistance information of the second terminal device.

Optionally, after receiving the SL DRX assistance information sent by the second terminal device, the first terminal device may determine the SL DRX assistance information as the assistance information of the second terminal device. The first terminal device also needs to report the resource request information list to the network side device to implement configuration of the sidelink resource of the second terminal device in the list by the network side device, the first terminal device may indicate the terminal device of the SL DRX assistance information by using the destination address of the second terminal device in the resource request information list.

An implementation of setting the assistance information list when the assistance information is the SL DRX assistance information is similar to an implementation of setting the assistance information list when the assistance information is the paging identifier. In an implementation, after determining the SL DRX assistance information as the assistance information of the second terminal device, the first terminal device may determine the index position of the sidelink resource request of the second terminal device in the resource request information list, and set the index identifier corresponding to the SL DRX assistance information in the assistance information list according to the index position, to set the SL DRX assistance information and its corresponding index identifier in the assistance information list.

In another implementation, after determining the SL DRX assistance information as the assistance information of the second terminal device, the first terminal device can set the corresponding assistance information at the same index position in the assistance information list according to the index position the resource request in the resource request information list. The index identifier corresponding to the assistance information corresponds to the index position of the assistance information in the assistance information list. The length of the assistance information list is the same as the length of the resource request information list.

At step 703, the sidelink SL resource request information list and the assistance information list are sent to the network side device.

In an embodiment of the present disclosure, the resource request information list includes the plurality of resource requests, and one resource request corresponds to one index position, and the assistance information list includes the assistance information of the second terminal device, and the index identifier corresponding to the assistance information, in which the index identifier corresponds to the index position corresponding to the resource request.

That is, after receiving the SL DRX assistance information sent by the second terminal device, the first terminal device may determine the SL DRX assistance information as the assistance information of the second terminal device when the first terminal device is in the connected state, and establish a mapping relationship between the assistance information and the destination address of the second terminal device in the resource request information list by means of the index identifier corresponding to the assistance information, so that the network side device determines the second terminal device for which the assistance information sent by the first terminal device is applicable according to the mapping relationship. It can be seen that, with an existing destination address field in the resource request information list, indication of the second terminal device for which the assistance information is applicable is realized, which may save a signaling overhead of reporting the assistance information.

It can be understood that the foregoing embodiments describe an implementation of the method for reporting terminal assistance information in embodiments of the present disclosure from the first terminal device side. Embodiments of the present disclosure also propose a method for acquiring terminal assistance information, and an implementation of the method for acquiring terminal assistance information will be described below from the network side device side. Please refer to FIG. 8. FIG. 8 is a flowchart illustrating a method for acquiring terminal assistance information according to an embodiment of the present disclosure. It should be noted that the method for acquiring terminal assistance information in an embodiment of the present disclosure may be executed by a network side device. As shown in FIG. 8, the method for acquiring terminal assistance information may include, but is not limited to, the following steps.

At step 801, a sidelink (SL) resource request information list and an assistance information list sent by a first terminal device are received; in which the resource request information list includes a resource request of a second terminal device, and the resource request of the second terminal device includes a destination address of the second terminal device; the assistance information list includes assistance information, and the assistance information determines a terminal device identifier corresponding to the assistance information by means of an index identifier; in which the terminal device identifier corresponding to the assistance information is a destination address in a resource request at a position of the index identifier in the resource request information list.

In some embodiments of the present disclosure, the assistance information in the assistance information list reported may be a paging identifier, or may also be sidelink discontinuous reception (SL DRX) assistance information, or may also be an SL DRX configuration, etc.

In an implementation, a length of the assistance information list may be 1. That is, the first terminal device may report the assistance information list to the network side device, and the assistance information list may include one or more assistance information. Each assistance information in the assistance information list may determine a UE identifier to which the assistance information applies by means of an index representation. The UE identifier may be the destination address in the resource request at the position of the index identifier in the resource request information list.

It can be understood that the first terminal device in a connected state needs to send a SidelinkUEInformation (sidelink communication terminal information) message, which includes the sidelink resource request information list, to a network side device (such as a base station) during sidelink communication. Each element in the resource request information list is the resource request of the second terminal device, and the resource request includes the destination address of the second terminal device, a corresponding transmitting mode (including unicast, multicast and broadcast), a quality of service (QoS) and a target transmitting frequency. In an embodiment of the present disclosure, when reporting the assistance information to the network side device, the first terminal device establishes a mapping relationship between the assistance information and the destination address of the second terminal device in the resource request information list by means of the index identifier corresponding to the assistance information, so that the network side device determines the second terminal device for which the assistance information sent by the first terminal device is applicable according to the mapping relationship. It can be seen that, with an existing destination address field in the resource request information list, indication of the second terminal device for which the assistance information is applicable is realized.

It should be noted that, in some embodiments of the present disclosure, settings if the index identifier can be various. For example, the index identifier can be carried in each assistance information, or the index identifier can also be determined by a position of the assistance information in the assistance information list. The method for setting the index identifier can refer to description of the implementations of the above-mentioned embodiments, and will not be repeated here.

In some embodiments of the present disclosure, the assistance information in the reported assistance information list may be a paging identifier, or may also be sidelink discontinuous reception (SL DRX) assistance information, or may also be a SL DRX configuration, etc. In an implementation, the assistance information may include a paging identifier of the second terminal device, where the second terminal device is a remote terminal device.

That is, when the first terminal device is a relay UE, the assistance information in the reported assistance information list may include the paging identifier of the second terminal device. For example, when the first terminal device is the relay UE, the relay UE needs to report the paging identifier of the second terminal device (such as the remote UE) to the network side device, so that the network side device may send the paging message for sending to the remote UE to the relay UE, and the relay UE may forward the paging message to the second terminal device.

In an implementation, when the assistance information in the reported assistance information list is sidelink discontinuous reception (SL DRX), the network side device may schedule a sidelink transmitting resource to the second terminal device corresponding to the destination address during an activation time of the second terminal device corresponding to the destination address.

For example, as shown in the above Table 2, assuming that the network side device receives the assistance information "SL DRX configuration A", and determines that SL DRX configuration A is applicable for SL-DestinationIdentity-r16 of the second (index identifier) entry of the resource request information list (such as SL TxResourceReqList-r16), which is the terminal device with the destination address of 00000001, the network side device can schedule the sidelink transmitting resource to the terminal device with the destination address of 00000001 during the activation time of the terminal device with the destination address of 00000001.

In an implementation, when the assistance information in the reported assistance information list is SL DRX assistance information, the network side device may determine SL DRX configuration of the second terminal device corresponding to the destination address according to the SL DRX assistance information.

As an example, the SL DRX assistance information may include a recommended SL DRX configuration. For example, assuming that the assistance information in the assistance information list reported by the first terminal device received by the network side device is the SL DRX assistance information, the SL DRX assistance information includes the recommended SL DRX configuration which is A, and the index identifier corresponding to the assistance information is 2. Assuming that the network side device determines that the destination address in the resource request at the second (index identifier) position in the resource request information list is "00000001" according to the index identifier, the network side device can determine that the SL DRX assistance information is applicable for the terminal device with the destination address of "00000001", the network side device may determine that the SL DRX configuration of the terminal device with the destination address of "00000001" is A according to the SL DRX assistance information.

By implementing embodiments of the present disclosure, the identifier of the terminal device UE for which the terminal assistance information is applicable can be determined through the index identifier when reporting the terminal assistance information, and the identifier of the terminal device UE is the destination address in the resource request at the position of the index identifier in the resource request information list. It can be seen that, in an embodiment of the present disclosure, the mapping relationship between the assistance information and the destination address of the peer terminal device UE in the resource request information list is established through the index identifier, thus realizing the indication for the peer terminal device when reporting the terminal assistance information, which can save a signaling overhead of reporting the terminal assistance information.

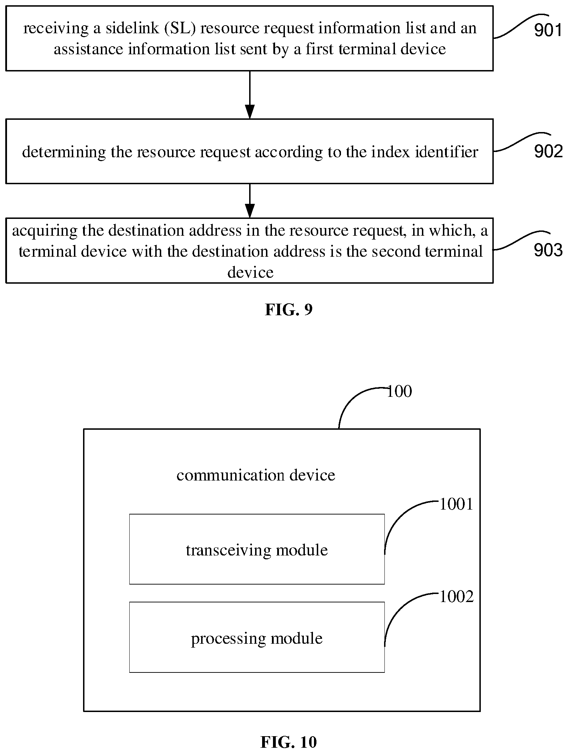

Please refer to FIG. 9. FIG. 9 is a flowchart illustrating a method for acquiring terminal assistance information according to an embodiment of the present disclosure. It should be noted that the method for acquiring terminal assistance information in an embodiment of the present disclosure may be executed by a network side device. As shown in FIG. 9, the method for acquiring terminal assistance information may include, but is not limited to, the following steps.

At step 901, a sidelink (SL) resource request information list and an assistance information list sent by a first terminal device are received; in which the resource request information list includes a plurality of resource requests, and one resource request corresponds to one index position, and the assistance information list includes assistance information of the second terminal device, and an index identifier corresponding to the assistance information, in which the index identifier corresponds to an index position corresponding to the resource request.

In an embodiment of the present disclosure, an implementation of the first terminal device sending the resource request information list and the assistance information list can be implemented by using any one of the methods in embodiments of the present disclosure, which is not limited in embodiments of the present disclosure, and will not be repeated herein.

At step 902, the resource request is determined according to the index identifier.

Optionally, after receiving the resource request information list and the assistance information list sent by the first terminal device, the network side device may determine the resource request at the index position in the resource request information list according to the index identifier corresponding to the assistance information in the assistance information list.

At step 903, the destination address in the resource request is acquired, in which, a terminal device with the destination address is the second terminal device.

Optionally, after determining the resource request, the network side device may acquire the destination address from the resource request, and the terminal device with the destination address is the second terminal device for which the assistance information is applicable.

It should be noted that due to difference settings of the index identifier, forms of the assistance information list may also be different. For example, as shown in Table 2 and Table 4 above, the index identifier may be carried in the corresponding assistance information. As another example, as shown in Table 1, Table 3, and Table 5 above, a length of the assistance information list is the same as a length of the resource request information list. The index identifier corresponding to the assistance information can be understood as the index position of the assistance information in the assistance information list. That is, the network side device can also determine the index identifier corresponding to the assistance information through the position of the assistance information in the assistance information list, so that the network side device can determine the resource request at the index position in the resource request information list according to the index identifier.

In an implementation, the index identifier is carried in corresponding assistance information. For example, assuming that the resource request information list (such as SL-TxResourceReqList-r16) reported by the first terminal device includes four elements is as shown in the above Table 1, and the reported assistance information list is as shown in the above Table 2, after the network side device receives the resource request information list and the assistance information list reported by the first terminal device, the network side device can determine the resource request at the index position which is 2 in the resource request information list according to the index identifier "2" corresponding to the assistance information, and acquire the destination address 00000001 in the resource request at the index position which is 2, so that the network side device can understood that the terminal device to which the assistance information (that is, the SL DRX configuration information is A in the above Table 2) is applied is the second terminal device with the destination address of "0000001". By analogy, the network side device can determine the resource request at the index position which is 4 in the resource request information list according to the index identifier "4" corresponding to the assistance information, and acquire the destination address 00000011 in the resource request at the index position which is 4, so that the network side device can understood that the terminal device to which the assistance information (that is, the SL DRX configuration information is B in the above Table 2) is applied is the second terminal device with the destination address of "00000011".

In another implementation, the length of the assistance information list is the same as the length of the resource request information list. The index position of the resource request in the resource request information list is the same as the index position of the assistance information in the assistance information list. The network side device may determine the index identifier corresponding to the assistance information according to the index position of the assistance information in the assistance information list.

For example, assuming that the resource request information list (such as SL-TxResourceReqList-r16) reported by the first terminal device includes four elements is as shown in the above Table 1, and the reported assistance information list is as shown in the above Table 3. After receiving the resource request information list and assistance information list sent by the first terminal device, the network side device can determine the resource request at index position which is 2 in the resource request information list according to the index identifier "2" corresponding to the assistance information (that is, the position of the assistance information in the assistance information list), and obtain the destination address 00000001 in the resource request at the index position which is 2, so that the network side device can understand that the terminal device for which the assistance information (that is, the SL DRX configuration information is A in the above table 3) is applicable is the second terminal with the destination address "00000001". By analogy, the network side device can determine the resource request at the index position which is 4 in the resource request information list according to the index identifier "4" corresponding to the assistance information, and obtain the destination address 00000011 in the resource request at the index position which is 4 , so that the network side device can understand that the terminal device for which the assistance information (i. e., the SL DRX configuration information is B in the above Table 3) is applicable is the second terminal device with the destination address "00000011".

It should be noted that, in some embodiments of the present disclosure, the assistance information in the reported assistance information list may be the paging identifier, or may also be the SL DRX assistance information, or may also be the SL DRX configuration information and the like. It can be understood that, depending on different content of the assistance information reported by the first terminal device to the network side device, a role played by the first terminal device and the second terminal device will also be different. For example, when the assistance information sent by the first terminal device to the network side device is the paging identifier, the first terminal device is the relay terminal device, and the second terminal device is the remote terminal device. For another example, when the assistance information sent by the first terminal device to the network side device is the SL DRX assistance information, the first terminal device is the transmitting terminal device, and the second terminal device is the receiving terminal device. For another example, when the assistance information sent by the first terminal device to the network side device is the SL DRX configuration information, the first terminal device is the receiving terminal device, and the second terminal device is the transmitting terminal device. A detailed description will be given below in combination with embodiments.

In some embodiments of the present disclosure, when the assistance information is the paging identifier, the network side device may determine a paging message of the paging identifier after obtaining the destination address in the resource request, and send the paging message to the second terminal device through the first terminal device. Optionally, in an embodiment of the present disclosure, the first terminal device is a relay terminal device, and the second terminal device is a remote terminal device. When the second terminal device sends a paging request to the network side device, the second terminal device sends its own paging identifier to the first terminal device. The first terminal device may receive the paging identifier sent by the second terminal device, so that the first terminal device sends the paging identifier to the network side device. The first terminal device determines the paging identifier as the assistance information of the second terminal device, sets the paging identifier in the assistance information list to report to the network side device. After receiving the assistance information list, the network side device can determine the resource request at the index position in the resource request information list according to the index identifier corresponding to the paging identifier in the assistance information list, and obtain destination address of the resource request at the index position. The terminal device with the destination address is the second terminal device for which the paging identifier is applicable, so that the network side device can send the paging message of the paging identifier to the first terminal device. The first terminal device forwards the paging message to the second terminal device.

In some embodiments of the present disclosure, when the assistance information is sidelink discontinuous reception (SL DRX) configuration information, the network side device schedules the sidelink transmitting resource of the DRX configuration information to the second terminal device according to the SL DRX configuration information during an activation time of the second terminal device.

Optionally, Optionally, in an embodiment of the present disclosure, the first terminal device is a receiving terminal device, and the second terminal device is a transmitting terminal device. In order to achieve a purpose of power saving, a network side device (such as a base station) can adjust Uu DRX according to the SL DRX configuration information of a sidelink terminal device, to overlap the SL DRX and the Uu DRX as much as possible, so as to achieve a purpose of power saving. In this scenario, the first terminal device may receive the SL DRX configuration information sent by the second terminal device, and the second terminal device may determine whether to accept the SL DRX configuration information. When the first terminal device determines to accept the SL DRX configuration information, the first terminal device needs to determine the SL DRX configuration information as the assistance information of the second terminal device, and sets the assistance information in the assistance information list to report the SL DRX configuration information to the network side device. After receiving the assistance information list, the network side device can determine the resource request at the index position in the resource request information list according to the index identifier corresponding to the SL DRX configuration information in the assistance information list, and obtain the destination address in the resource request at the index position. The terminal device with the destination address is the second terminal device fir which the SL DRX configuration information is applicable, so that the network side device schedules the sidelink transmitting resource to the second terminal device according to the SL DRX configuration information during the activation time of the second terminal device.

In some embodiments of the present disclosure, when the assistance information is SL DRX assistance information, and the SL DRX assistance information includes recommended SL DRX configuration information, the network side device determines the SL DRX configuration information of the second terminal device according to the SL DRX assistance information.

Optionally, the first terminal device is a transmitting terminal device, and the second terminal device is a receiving terminal device. In order to achieve a purpose of power saving, the network side device (such as a base station) can adjust Uu DRX according to the SL DRX configuration information of the sidelink terminal device, to overlap the SL DRX and Uu DRX as much as possible, so as to achieve the purpose of power saving. The SL DRX The configuration information may be recommended SL DRX configuration information in the SL DRX assistance information sent by the receiving terminal device.

For example, since a unicast SL DRX is sent by the transmitting terminal device (such as the first terminal device described in embodiments of the present disclosure) to the receiving terminal device (such as the second terminal device described in embodiments of the present disclosure), the receiving terminal device may send the SL DRX assistance information to the transmitting terminal device, the SL DRX assistance information includes the recommended SL DRX configuration information, so that when the transmitting terminal device is in the connected state, the transmitting terminal device reports the received SL DRX assistance information to the network side device (such as the base station), to enable the network side device (such as the base station) to determine the SL DRX configuration according to the SL DRX assistance information. After receiving the assistance information list, the network side device can determine the resource request at the index position in the resource request information list according to the index identifier corresponding to the SL DRX configuration information in the assistance information list, and obtain the destination address in the resource request at the index position. The terminal device with the destination address is the second terminal device for which the SL DRX configuration information is applicable, so that the network side device can adjust the Uu DRX, to overlap the SL DRX and Uu DRX as much as possible, so as to achieve the purpose of power saving.

By implementing an embodiment of the present disclosure, a mapping relationship between the assistance information and the destination address of the second terminal device in the resource request information list is established by means of the index identifier corresponding to the assistance information, so that the network side device determines the second terminal device for which the assistance information sent by the first terminal device is applicable according to the mapping relationship. It can be seen that, with an existing destination address field in the resource request information list, indication of the second terminal device for which the assistance information is applicable is realized, which may save a signaling overhead of reporting the assistance information.

In the above embodiments provided in the present disclosure, the methods provided in embodiments of the present disclosure are introduced from the perspectives of the terminal device (such as the first terminal device in the foregoing method embodiments) and the network side device respectively. In order to realize various functions in the methods provided by the above embodiments of the present disclosure, the terminal device (such as the first terminal device in the foregoing method embodiments) and the network side device may include a hardware structure, and a software module, to implement the above-mentioned functions in the form of the hardware structure, the software module, or the hardware structure plus the software module. A certain function of the above-mentioned functions may be implemented in the form of the hardware structure, the software module, or the hardware structure plus the software module.

Please refer to FIG. 10, FIG. 10 is a schematic diagram illustrating a structure of a communication device according to an embodiment of the present disclosure.. The communication device 100 shown in FIG. 10 may include a transceiver module 1001 and a processing module 1002. The transceiver module 1001 may include a transmitting module and/or a receiving module, the transmitting module is configured to realize a transmitting function, the receiving module is configured to realize a receiving function, and the transceiver module 1001 can realize the transmitting function and/or the receiving function.

The communication device 100 may be a terminal device (such as the first terminal device in the foregoing method embodiments), may also be a device in the terminal device, and may also be a device that can be matched and used with the terminal device. Alternatively, the communication device 100 may be a network device, or a device in the network device, or a device that can be matched and used with the network device.

The communication device 100 is a terminal device (such as the first terminal device in the aforementioned method embodiment): in an embodiment of the present disclosure, the transceiver module 1001 is configured to send a sidelink (SL) resource request information list and an assistance information list to a network side device; in which the resource request information list includes a plurality of resource requests, and one resource request corresponds to one index position, and the assistance information list includes assistance information of the second terminal device, and an index identifier corresponding to the assistance information, in which the index identifier corresponds to an index position corresponding to the resource request.

In an implementation, the index identifier is carried in the corresponding assistance information.

In a possible implementation, the processing module 1002 is configured to determine the index position of the resource request in the resource request information list, and set the index identifier corresponding to the assistance information in the assistance information list according to the index position.

In a possible implementation, a length of the assistance information list is the same as a length of the resource request information list; the index position of the resource request in the resource request information list is the same as the index position of the assistance information in the assistance information list.

In a possible implementation, the processing module 1002 is configured to determine the assistance information.

In a possible implementation, the assistance information is one of:
a paging identifier sent by the second terminal device; sidelink discontinuous reception (SL DRX) configuration information sent by the second terminal device; and SL DRX assistance information sent by the second terminal device, in which, the SL The DRX assistance information includes recommended SL DRX configuration information.

The communication device 100 is a network device: in an embodiment of the present disclosure, the transceiver module 1001 is configured to receive a sidelink (SL) resource request information list and an assistance information list sent by a first terminal device; in which the resource request information list includes a plurality of resource requests, and one resource request corresponds to one index position, and the assistance information list includes assistance information of the second terminal device, and an index identifier corresponding to the assistance information, in which the index identifier corresponds to an index position corresponding to the resource request; the processing module 1002 is configured to determine the resource request according to the index identifier, and obtain the destination address in the resource request, in which the terminal device with the destination address is the second terminal device .

In an implementation, the index identifier is carried in corresponding assistance information.

In an implementation, a length of the assistance information list is the same as a length of the resource request information list; the index position of the resource request in the resource request information list is the same as the index position of the assistance information in the assistance information list.

In an implementation, the processing module 1002 is further configured to determine an index identifier corresponding to the assistance information according to an index position of the assistance information in the assistance information list.

In a possible implementation, when the assistance information is a paging identifier, the processing module 1002 is further configured to determine a paging message of the paging identifier; the transceiver module 1001 is further configured to send the paging message to the second terminal device through the first terminal device.

In a possible implementation, when the assistance information is sidelink discontinuous reception (SL DRX) configuration information, the transceiver module 1001 is further configured to, during an activation time of the second terminal device, schedule a sidelink transmitting resource to the second terminal device according to the SL DRX configuration information.

In a possible implementation, when the assistance information is SL DRX assistance information, and the SL DRX assistance information includes recommended SL DRX configuration information, the processing module 1002 is further configured to determine the SL DRX configuration information of the second terminal device according to the SL DRX assistance information.

Regarding the apparatus in the foregoing embodiments, a specific manner in which each module executes operations has been described in detail in embodiments related to the method, and will not be described in detail here.

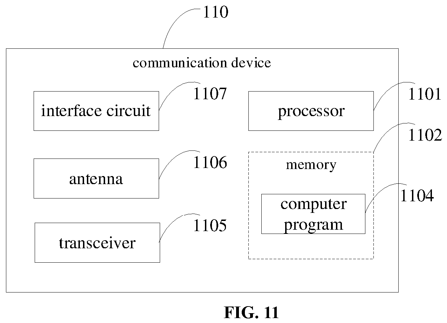

Please refer to FIG. 11, FIG. 11 is a schematic diagram illustrating a structure of another communication device 110 according to an embodiment of the present disclosure.. The communication device 110 may be a network device, or a terminal device (such as the first terminal device in the aforementioned method embodiment), or a chip, a chip system, or a processor that supports the network device to implement the above method, or a chip, a chip system, or a processor that supports the terminal device (such as the first terminal device in the foregoing method embodiment) to implement the above method. The device can be configured to implement the methods described in the above method embodiments, and details may refer to descriptions in the above method embodiments.

The communications device 110 may include one or more processors 1101. The processor 1101 may be a general-purpose processor or a special-purpose processor. For example, the communications device 110 may be a baseband processor or a central processor. The baseband processor can be configured to process communication protocols and communication data, and the central processor can be configured to control a communication device (such as a base station, a baseband chip, a terminal device, a terminal device chip, a DU or a CU, etc.) and execute a computer program, to process data of the computer program.

Optionally, the communication device 110 may further include one or more memories 1102, on which a computer program 1104 may be stored, and the processor 1101 executes the computer program 1104, so that the communication device 110 executes the method described in the foregoing method embodiments. Optionally, the memory 1102 may further have data stored thereon. The communication device 110 and the memory 1102 may be set separately or integrated together.

Optionally, the communication device 110 may further include a transceiver 1105 and an antenna 1106. The transceiver 1105 may be referred to as a transceiver unit, a transceiver, or a transceiver circuit, etc., and is configured to implement a transceiver function. The transceiver 1105 may include a receiver and a transmitter, and the receiver may be referred to as a receiving device or a receiving circuit, etc., for realizing a receiving function; the transmitter may be referred to as a transmitting device, or a transmitting circuit, for realizing a transmitting function.

Optionally, the communication device 110 may further include one or more interface circuits 1107. The interface circuit 1107 is configured to receive code instructions and transmit the code instructions to the processor 1101. The processor 1101 runs the code instructions to enable the communication device 110 to execute the methods as described in the foregoing method embodiments.

The communication device 110 is a terminal device (such as the first terminal device in the aforementioned method embodiment): the transceiver 1105 is configured to execute step 301 in FIG. 3; to execute step 401 in FIG. 4; to execute step 501 and step 503 in FIG. 5; to execute step 601 and step 603 in FIG. 6; to execute step 701 and step 703 in FIG. 7. The processor 1101 is configured to execute step 502 in FIG. 5; to execute step 602 in FIG. 6; and to execute step 702 in FIG. 7.

The communication device 110 is a network device: the transceiver 1105 is configured to execute step 801 in FIG. 8; and to execute step 901 in FIG. 9. The processor 1101 is configured to execute step 902 and step 903 in FIG. 9.

In an implementation, the processor 1101 may include a transceiver for implementing receiving and transmitting functions. For example, the transceiver can be a transceiver circuit, or an interface, or an interface circuit. Transceiver circuits, interfaces or interface circuits for realizing the receiving and transmitting functions can be separated or integrated together. The above-mentioned transceiver circuit, interface or interface circuit may be configured for reading and writing code/data, or the above-mentioned transceiver circuit, interface or interface circuit may be configured for signal transmission or transfer.

In an implementation, the processor 1101 may store a computer program 1103, and the computer program 1103 runs on the processor 1101 to enable the communication device 110 to execute the methods as described in the foregoing method embodiments. The computer program 1103 may be solidified in the processor 1101, and in this case, the processor 1101 may be implemented by hardware.

In an implementation, the communication device 110 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs), etc.

The communication device as described in the above embodiments may be a network device or a terminal device (such as the first terminal device in the foregoing method embodiments), but the scope of the communication device described in the present disclosure is not limited thereto, and a structure of the communication device may not be subject to FIG. 11. The communication device may be a stand-alone device or may be a part of a larger device. For example, the communication device may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle device, a network device, a cloud device, an artificial intelligence device, etc.; and
(6) others, and so forth.

Those skilled in the related art may understand that various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the present disclosure.

A communication system is further provided in embodiments of the disclosure. The system includes a communication device serving as a terminal device in embodiments of FIG. 10 and a communication device serving as a network device, or the system includes a communication device serving as a terminal device and a communication device serving as a network device in embodiments of FIG. 11.

A computer-readable storage medium storing instructions is further provided in the disclosure. When the instructions are executed, functions of the any one method embodiment are implemented.

A computer program product is further provided. The computer program product implements functions of the above any one method embodiment when executed by a processor.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those ordinary skilled in the art can understand that first, second, and other numbers involved in the present disclosure are only for convenience of description, and are not used to limit the scope of embodiments of the present disclosure, and does not indicate an order.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the present disclosure, corresponding relationships indicated by some rows may not be configured. For another example, appropriate transformations and adjustments, such as splitting and merging, may be made based on the above tables. Names of parameters shown in headers in the tables may be other names understandable by the communication device, and values or representations of the parameters may be other values or representations understandable by the communication device. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific disclosure and a design constraint of the technical solution. Those skilled in the art may adopt different methods for each specific disclosure to implement the described functions, but such implementation should not be considered beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. A method for reporting terminal assistance information, performed by a first terminal device, comprising:
sending a sidelink (SL) resource request information list and an assistance information list to a network side device; wherein the resource request information list comprises a resource request of a second terminal device, and the resource request of the second terminal device comprises a destination address of the second terminal device; the assistance information list comprises assistance information, and the assistance information determines a terminal device identifier corresponding to the assistance information by means of an index identifier;
wherein the terminal device identifier corresponding to the assistance information is a destination address in a resource request at a position of the index identifier in the resource request information list.

2. The method according to claim 1, wherein the index identifier is carried in the assistance information.

3. The method of claim 2, further comprising:
setting the index identifier according to an index position of the resource request corresponding to the destination address of the second terminal device in the resource request information list.

4. The method according to claim 1, wherein the index identifier is determined by a position of the assistance information in the assistance information list.

5. The method of claim 4, further comprising:
setting the assistance information at a same index position in the assistance information list according to the index position of the resource request corresponding to the destination address of the second terminal device in the resource request information list; wherein a length of the assistance information list is the same as a length of the resource request information list.

6. The method according to any one of claims 1 to 5, wherein the assistance information comprises a paging identifier of the second terminal device; wherein the second terminal device is a remote terminal device.

7. The method according to any one of claims 1 to 5, wherein the assistance information comprises a sidelink discontinuous reception (SL DRX) configuration; wherein the SL DRX configuration is an SL DRX configuration received by the first terminal device from the second terminal device, and the first terminal device accepts the SL DRX configuration.

8. The method according to any one of claims 1 to 5, wherein the assistance information comprises received SL DRX assistance information; wherein the SL DRX assistance information is SL DRX assistance information received by the first terminal device from the second terminal device.

9. A method for acquiring terminal assistance information, performed by a network side device, comprising:
receiving a sidelink (SL) resource request information list and an assistance information list sent by a first terminal device; wherein the resource request information list comprises a resource request of a second terminal device, and the resource request of the second terminal device comprises a destination address of the second terminal device; the assistance information list comprises assistance information, and the assistance information determines a terminal device identifier corresponding to the assistance information by means of an index identifier;
wherein the terminal device identifier corresponding to the assistance information is a destination address in a resource request at a position of the index identifier in the resource request information list.

10. The method according to claim 9, wherein the assistance information carries the index identifier configured to index the resource request information list.

11. The method according to claim 9, wherein the index identifier is determined by a position of the assistance information in the assistance information list.

12. The method according to any one of claims 9 to 11, further comprising:
determining the destination address in the resource request at the position of the index identifier in the resource request information list according to the index identifier in the assistance information list received; wherein the assistance information corresponding to the index identifier is applicable to the second terminal device corresponding to the destination address.

13. The method according to any one of claims 9 to 11, wherein the assistance information is a paging identifier, and the method further comprises:
sending a paging message whose destination address is the paging identifier to the first terminal device for reporting.

14. The method according to any one of claims 9 to 11, wherein the assistance information is a sidelink discontinuous reception (SL DRX) configuration, and the method further comprises:
scheduling a sidelink transmitting resource to the second terminal device corresponding to the destination address within an activation time of the second terminal device corresponding to the destination address.

15. The method according to any one of claims 9 to 11, wherein the assistance information is SL DRX assistance information, and the SL DRX assistance information comprises a recommended SL DRX configuration; and the method further comprises:
determining a SL DRX configuration of the second terminal device corresponding to the destination address according to the SL DRX assistance information.

16. A communication device, comprising:
a transceiver module, configured to send a sidelink (SL) resource request information list and an assistance information list to a network side device; wherein the resource request information list comprises a resource request of a second terminal device, and the resource request of the second terminal device comprises a destination address of the second terminal device; the assistance information list comprises assistance information, and the assistance information determines a terminal device identifier corresponding to the assistance information by means of an index identifier;
wherein the terminal device identifier corresponding to the assistance information is a destination address in a resource request at a position of the index identifier in the resource request information list.

17. The communication device according to claim 16, wherein the index identifier is carried in the assistance information.

18. The communication device of claim 17, further comprising:
a processing module, configured to set the index identifier according to an index position of the resource request corresponding to the destination address of the second terminal device in the resource request information list.

19. The communication device according to claim 16, wherein the index identifier is determined by a position of the assistance information in the assistance information list.

20. The communication device of claim 19, further comprising:
a processing module, configured to set the assistance information at a same index position in the assistance information list according to the index position of the resource request corresponding to the destination address of the second terminal device in the resource request information list; wherein a length of the assistance information list is the same as a length of the resource request information list.

21. The communication device according to any one of claims 16 to 20, wherein the assistance information comprises a paging identifier of the second terminal device; wherein the second terminal device is a remote terminal device.

22. The communication device according to any one of claims 16 to 20, wherein the assistance information comprises a sidelink discontinuous reception (SL DRX) configuration; wherein the SL DRX configuration is an SL DRX configuration received by the first terminal device from the second terminal device, and the first terminal device accepts the SL DRX configuration.

23. The communication device according to any one of claims 16 to 20, wherein the assistance information comprises received SL DRX assistance information; wherein the SL DRX assistance information is SL DRX assistance information received by the first terminal device from the second terminal device.

24. A communication device, comprising:
a transceiver module, configured to receive a sidelink (SL) resource request information list and an assistance information list sent by a first terminal device; wherein the resource request information list comprises a resource request of a second terminal device, and the resource request of the second terminal device comprises a destination address of the second terminal device; the assistance information list comprises assistance information, and the assistance information determines a terminal device identifier corresponding to the assistance information by means of an index identifier;
wherein the terminal device identifier corresponding to the assistance information is a destination address in a resource request at a position of the index identifier in the resource request information list.

25. The communication device according to claim 24, wherein the assistance information carries the index identifier configured to index the resource request information list.

26. The communication device according to claim 24, wherein the index identifier is determined by a position of the assistance information in the assistance information list.

27. The communication device according to claim 26, further comprising:
a processing module, configured to determine the destination address in the resource request at the position of the index identifier in the resource request information list according to the index identifier in the assistance information list received; wherein the assistance information corresponding to the index identifier is applicable to the second terminal device corresponding to the destination address.

28. The communication device according to any one of claims 24 to 26, wherein the assistance information is a paging identifier, and the transceiver module is further configured to send a paging message whose destination address is the paging identifier to the first terminal device for reporting.

29. The communication device according to any one of claims 24 to 26, wherein the assistance information is a sidelink discontinuous reception (SL DRX) configuration;
the transceiver module is configured to schedule a sidelink transmitting resource to the second terminal device corresponding to the destination address within an activation time of the second terminal device corresponding to the destination address.

30. The communication device according to any one of claims 24 to 26, wherein the assistance information is SL DRX assistance information, and the SL DRX assistance information comprises a recommended SL DRX configuration;
the processing module is further configured to determine a SL DRX configuration of the second terminal device corresponding to the destination address according to the SL DRX assistance information.

31. A communication device, comprising a processor and a memory having a computer program stored thereon, wherein the processor is configured to execute the computer program stored in the memory, causing the device to perform the method according to any one of claims 1 to 8.

32. A communication device, comprising a processor and a memory having a computer program stored thereon, wherein the processor is configured to execute the computer program stored in the memory, causing the device to perform the method according to any one of claims 9 to 15.

33. A computer-readable storage medium for storing instructions, when the instructions are executed, the method according to any one of claims 1 to 8 is implemented.

34. A computer-readable storage medium for storing instructions, when the instructions are executed, the method according to any one of claims 9 to 15 is implemented.
